# EUROPEAN PATENT APPLICATION

(11) **EP 0 802 666 A2**
(43) Date of publication of application: **22.10.1997**
(21) Application number: 97106466.2
(22) Date of filing: 18.04.1997
(51) Int. Cl.: H04N 1/32

(54) **Communication apparatus**

(30) Priority: 19.04.1996 JP 98046/96
(71) Applicant: NEC CORPORATION, Tokyo (JP)
(72) Inventor: Sakaguchi, Tomoyuki, Minato-ku, Tokyo (JP)
(74) Representative: VOSSIUS & PARTNER

(57) **Abstract**

A facsimile apparatus includes an instruction input device (115) which inputs an instruction, a memory (109) which stores image data, and an editor (113, 114) which edits the image data stored in the memory in pages according to an edit instruction received from the instruction input device. After the image data stored in the memory is edited in pages by the editor as necessary, the image data stored in the memory is transmitted to a desired destination through a communication line.

## Description

The present invention generally relates to a communication apparatus, and in particular to an image communication apparatus having a memory which stores image data to be transmitted.

In a facsimile (fax) machine that can send images of pages to another fax machine or to a personal computer equipped with a fax modem, the image data to be transmitted is first stored onto a memory and then is transmitted to the destination via the telephone system. Since the image data stored in the memory, needless to say, is invisible, the user cannot check the contents of the transmission page which will be transmitted and printed at the receiving side. There may be cases where, contrary to intention of a sender, a received page is different in layout from the original page. In order to overcome such a disadvantage, there has been proposed fax apparatuses having a means of printing out a stored transmission page before sending in Japanese Patent Unexamined Publication Nos. 4-222159 and 5-300298.

According to the conventional fax apparatus mentioned above, the user can check the transmission page before sending a fax. However, in the case of a transmission page different from the original page, all the materials must be input to the fax apparatus again by an image reader or through a personal computer.

An object of the present invention is to provide a communication apparatus and a transmission method which can provide easy and reliable transmission of image data without the inconvenience of inputting all the materials again.

Another object of the present invention is to provide a communication apparatus and a transmission method which can provide a partial modification or correction to a transmission image before sending.

According to an aspect of the present invention, a communication apparatus is provided with an editor by which image data stored in a memory is edited. After edited as necessary, the image data stored in the memory may be transmitted. The communication apparatus includes an instruction input device for inputting an instruction, a memory for storing the image data, and an editor for editing the image data stored in the memory according to an edit instruction received from the instruction input device.

The editor may be comprised of a management memory and a processor. The management memory stores management information including page information of the image data. The processor edits the image data stored in the memory in pages by changing the page information according to the edit instruction. The processor may perform one selected from addition of a new page, deletion of a page and a changing of a sequence of pages according to the edit instruction. The processor may perform insertion of a new page by using a combination of the addition of the new page and the changing of a sequence of pages.

The communication apparatus may be further comprised of an input device for inputting the image data to store it to the memory, an output device for outputting the image data stored in the memory in a page form, and a controller for instructing the output device to output the image data stored in the memory in the page form before transmitting the image data to the desired destination according to an instruction received from the instruction input device. The output device may be a printer.
Fig. 1 is a block diagram showing a communication system using a facsimile apparatus according to an embodiment of the present invention;
Fig. 2 is a schematic diagram showing details of an image data file memory of the facsimile apparatus shown in Fig. 1;
Fig. 3 is a block diagram showing details of an editor employed in the facsimile apparatus shown in Fig. 1;
Fig. 4A is a schematic diagram showing an example of management information generated at the time when a storing and editing instruction is received;
Fig. 4B is a diagram illustrative of access information of a block management area;
Fig. 5A is a schematic diagram showing an example of management information at the time when an attribute information of a first page data is generated and added to a page management table;
Fig. 5B is a diagram illustrative of an access operation of the image data file memory according to the attribute information as shown in Fig. 5A;
Fig. 6A is a schematic diagram showing an example of management information at the time when an attribute information of a second page data is generated and added to the page management table;
Fig. 6B is a diagram illustrative of an access operation of the image data file memory according to the attribute information as shown in Fig. 6A;
Fig. 7A is a schematic diagram showing an example of management information at the time when an attribute information of a third page data is generated and added to the page management table;
Fig. 7B is a diagram illustrative of an access operation of the image data file memory according to the attribute information as shown in Fig. 7A;
Fig. 8A is a schematic diagram showing an example of management information at the time when the attribute information of the second page data is deleted from the page management table;
Fig. 8B is a diagram illustrative of an access operation of the image data file memory according to the attribute information as shown in Fig. 8A;
Fig. 9A is a schematic diagram showing an example of management information at the time when an attribute information of the first page data is interchanged with that of the second page data in the page management table; and
Fig. 9B is a diagram illustrative of an access operation of the image data file memory according to the attribute information as shown in Fig. 9A.

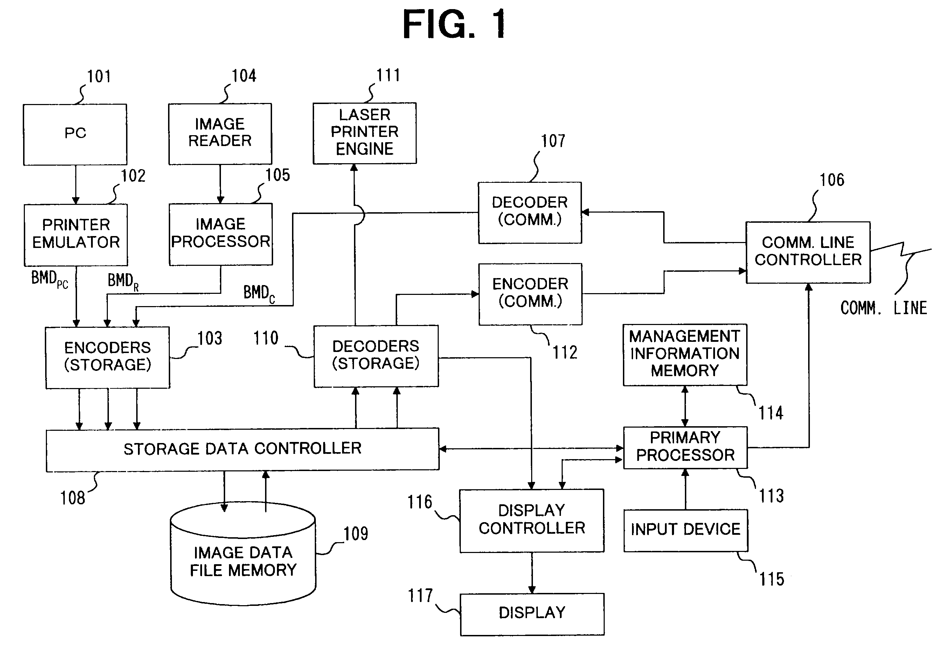

Referring to Fig. 1, the facsimile apparatus according to an embodiment of the present invention is connected to a personal computer 101 and to a communication line such as a public telephone line to receive and transmit coded data.

The printer emulator 102 converts print data such as text data and graphics data received from the personal computer 101 into bit-mapped data BMD_{PC} which is generated based on a document size designated by size data received from the personal computer 101. The bit-mapped data BMD_{PC} is output to an encoder 103 for storage. The printer emulator 102 may be incorporated in either the personal computer 101 or the facsimile apparatus.

The facsimile apparatus is provided with an image reader 104 which reads a document by scanning with a photosensor such as a CCD device to generate analog or multi-value image signals. An image processor 105 converts the image signals into binary form to generate bit-mapped data BMD_{R} which is output to the encoder 103 for storage.

Further, a communication line controller 106 receives coded data through the communication line and a decoder 107 for communication demodulates and decodes the received coded data into received bit-mapped data BMD_{C} which is output to the encoder 103 for compression.

The encoder 103 encodes the bit-mapped data BMD_{PC}, BMD_{R} and BMD_{C} to generate encoded image data, respectively, based on a common coding scheme such as Modified Huffman (MH) or Modified READ (MR) coding scheme. The encoder 103 may be comprised of three separate encoders corresponding to the bit-mapped data BMD_{PC}, BMD_{R} and BMD_{C}, respectively. Under control of a storage data controller 108, each encoded image data is divided into blocks which are stored onto an image data file memory 109. Further, the block management information regarding the encoded image data blocks is generated and stored onto an image data file memory 109.

The encoded image data blocks stored in the image data file memory 109 are read and linked according to the block management information to reproduce the encoded image data under control of the storage data controller 108. The reproduced encoded image data is decoded into bit-mapped data by a decoder 110 for expansion and the expanded data is selectively output to a laser printer engine 111 and an encoder 112 for communication. The decoder 110 for expansion has a function of outputting the bit-mapped data so as to match the data rate of the bit-mapped data with the respective rates required by the laser printer engine 111 and the encoder 112 for communication.

The encoder 112 for communication encodes the expanded bit-mapped data to generate encoded image data according to a facsimile coding scheme such as MH, MR or MMR (Modified-Modified READ) coding scheme and modulates the encoded image data into transmission encoded image data. The transmission encoded image data is transmitted to the receiving end through the communication line controller 106 and the communication line.

A primary processor 113 controls the communication line controller 106, the storage data controller 108 and other component circuits of the facsimile apparatus. In particular, the primary processor 113 performs editing of the image data stored in the image data file memory 109 using management information stored in a management information memory 114. The fax sending, editing and other operations are performed according to instructions input by a user operating an input device 115 such as a keypad or a touch-sensitive display. Further, the facsimile apparatus is provided with a display controller 116 and a display such as a liquid-crystal display (LCD) to display at least page information of a data file to be transmitted so that the user can easily edit the image data stored in the image data file memory 109.

In the above configuration, according to a printout instruction input by the user operating the input device 115, the data file to be transmitted is printed through the laser printer engine 111 so that the user checks before sending if the data file is printed as intended. If the printed data file is different from as intended, the user instructs the primary processor 113 to start an editor program so as to edit the image data of the data file stored in the image data file memory 109.

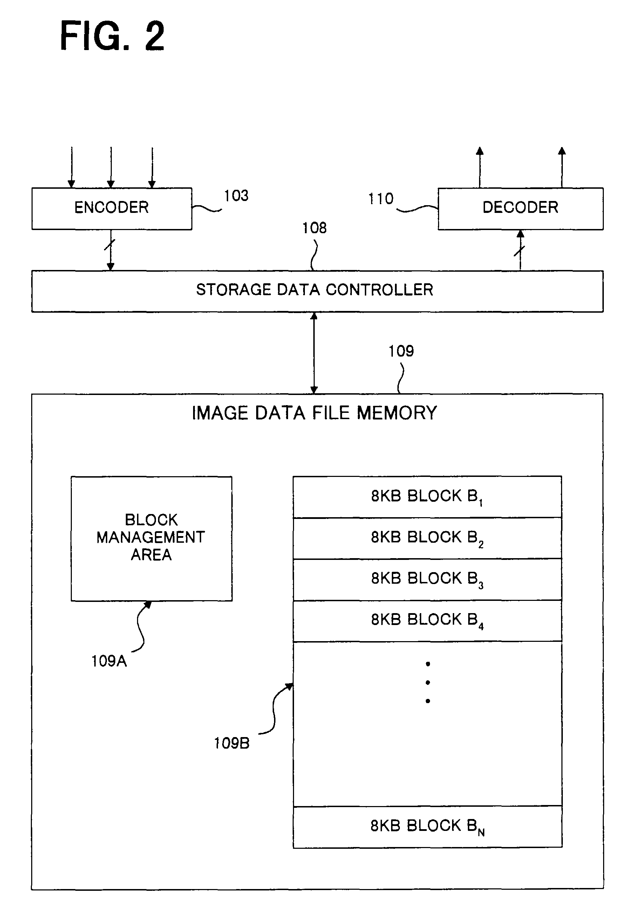

Referring to Fig. 2, the image data file memory 109 has a block management area 109A and a data block area 109B. The block management area 109A stores block management information which is used to manage data storage locations of the data block area 109B. The data block area 109B includes a plurality of block areas B₁-B_{N} each having 8K Byte. As described above, the bit-mapped data is divided into 8KB data blocks which are stored onto the data block area 109B in blocks under control of the storage data controller 108. At the same time, the block management information is generated and stored in the block management area 109A.

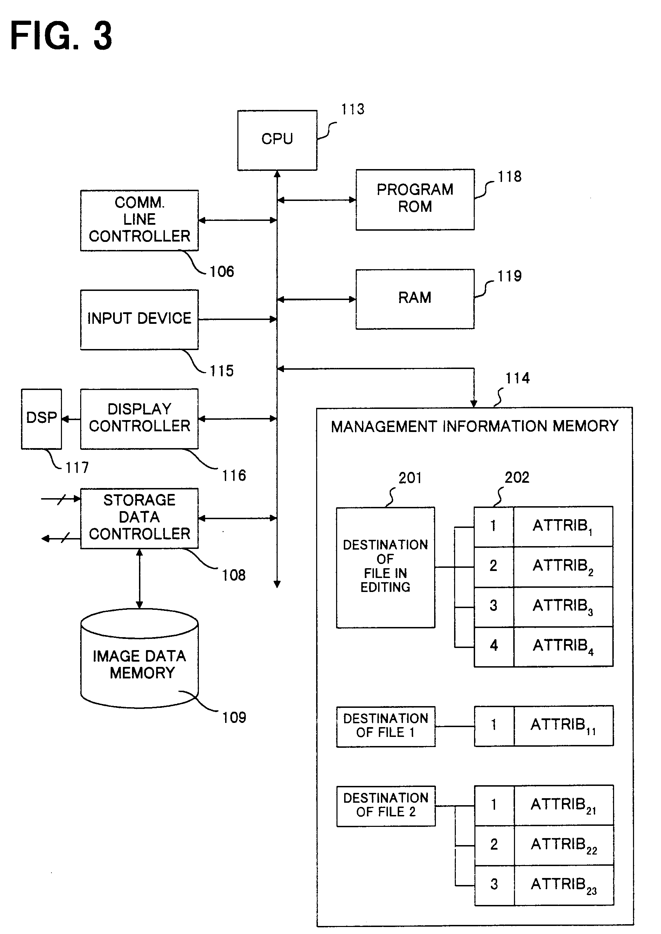

Referring to Fig. 3, an editor of the image data stored in the image data file memory 109 is comprised of the primary processor (here, CPU) 113, the management information memory 114 and other necessary components including a program ROM 118 and a RAM 119. The program ROM 118 previously stores a facsimile communication program, an editor program and other necessary programs. The RAM 119 may stores a list of registered destination addresses. The primary processor 113 performs the facsimile operations and the editing operation according to the facsimile communication program and the editor program stored in the program ROM 118, respectively. When receiving an editing instruction from the input device 115, the primary processor 113 starts the editor program and performs the editing of the image data stored in the image data file memory 109 using the management information memory 114 as will be described in detail.

It should be noted that the primary processor 113 controls the other circuits (not shown in this figure) of the facsimile apparatus to perform the input of bit-mapped data, the print-out of the image data, fax sending and receiving, and other necessary functions.

The management information memory 114 has a destination information area 201 and a page management table 202 for each data file. The destination information area 201 and the page management table 202 are generated and the contents thereof are designated by the user operating the input device 115. The destination address of the destination information area 201 is used to transmit the data file. That is, when receiving a fax transmission instruction from the input device 115, the primary processor 113 reads the destination address from the destination information area 201 of the file, instructs the storage data controller 108 to read the image data of the file from the data block area 109B while referring to the block management area 109A, and then controls the decoder 110, the encoder 112 and the communication line controller 106 to send a fax of the image data to the designation address.

The page management table 202 stores designated attributes including an image size, resolution and a memory location for each page of a data file. Edits of the stored image of a file, for example, page change, page deletion and page addition or insertion, are performed by changing the page management table 202 corresponding to the file. More specifically, the user can change the page management table 202 by operating the input device while looking at the display 117. For example, the page change, the page deletion and the page addition are performed by changing the sequence of the attributes, deleting the attributes of a page from the page management table 202, and adding the attributes of a new page to the page management table 202, respectively. In the case of editing, the file structure of the destination information area 201 and the page management table 202 as shown in this figure may be displayed on the display 117 to allow easy editing. The details will be described hereinafter.

### CREATION OF MANAGEMENT INFORMATION

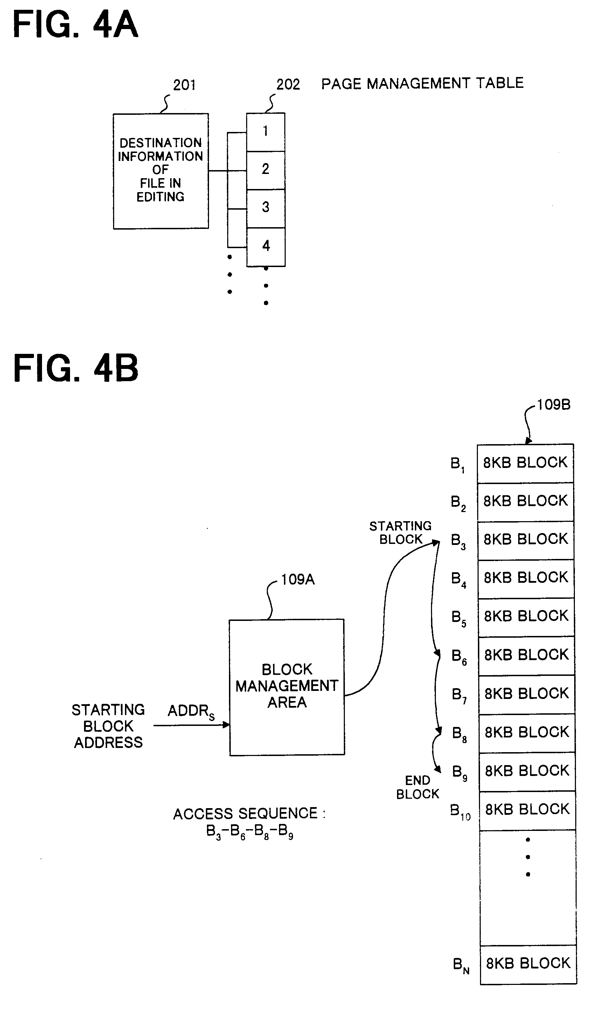

Referring to Fig. 4A, when receiving a storage instruction from the input device, the primary processor 113 starts the editor program which builds a destination information area 201 and a page management table 202 of a data file in the management information memory 114. The destination information area 201 may store a plurality of destination addresses. The page management table 202 stores the attribute management information for each page of the data file. When the file is just generated, however, there is no need to store a destination address in the destination information area 201 and attributes in the page management table 202.

Referring to Fig. 4B, the block management area 109A stores block management information which is used to manage data storage locations (block areas B₁-B_{N}) of the data block area 109B. In the case where the image data of a page is divided into four data blocks which are stored over a plurality of block areas, for example, B₃, B₆, B₈ and B₉ in the order presented, the access sequence, B₃-B₆-B₈-B₉, is stored as the block management information in the block management area 109A. Therefore, when the address of a starting block B₃ is received from the primary processor 113, the storage data controller 108 can read the entire image data of the page from the data block area 109B by referring to the access sequence, B₃-B₆-B₈-B₉, stored in the block management area 109A.

### STORAGE OF PAGE DATA

For simplicity, it is assumed that the primary processor 113 receives the destination information of a data file from the input device 115 or the RAM and then the storage data controller 108 receives the image data of a first page of the data file from the personal computer 101 or the image reader 104.

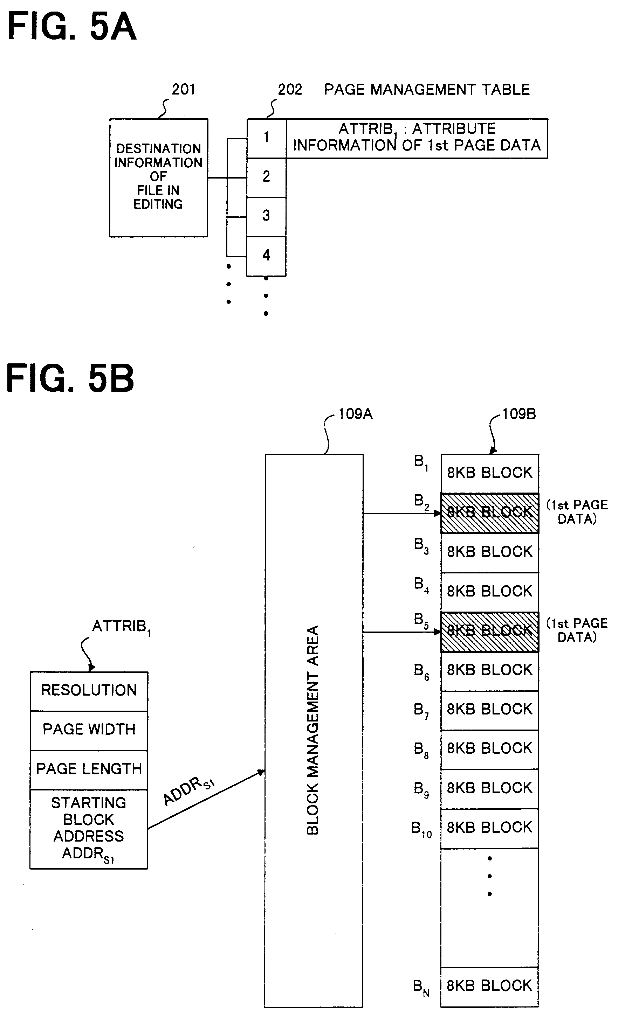

Referring to Figs. 5A and 5B, the primary processor 113 generates the destination information area 201 and the page management table 202 in the management information memory 114 and stores the attribute information ATTRIB₁ of the first page onto the first page location of the page management table 202. In Fig. 5B, the attribute information ATTRIB₁ of the first page includes page resolution, page width, page length, and the address ADDR_{S1} of a starting data block B₂.

In the case where the printer emulator 102 receives print data including text and/or graphics described with any page description language for a page printer from the personal computer 101, the printer emulator 102 generates a page of bit-mapped data BMD_{PC} based on a designated document size and then outputs the page of bit-mapped data BMD_{PC} to the encoder 103 for storage compression. The encoder 103 encodes the page of bit-mapped data BMD_{PC} to generate the page of encoded image data, which is divided into a plurality of blocks (here, two blocks) under control of the storage data controller 108. The two data blocks are stored onto available blocks of the data block area 109B. It is assumed that the two data blocks corresponding to a first page are stored onto the blocks B₂ and B₅, respectively, as shown in Fig. 5B.

At the same time, the access sequence of the blocks B₂ and B₅ is generated and stored in the block management area 109A. In other words, the access sequence is set to a sequence of B₂-B₅, which is used to link the data blocks B₂ and B₅ in the original sequence to reproduce the first page data. Therefore, when the address ADDR_{S1} of the starting block B₂ included in the attribute information ATTRIB₁ is received from the primary processor 113, the storage data controller 108 can read the entire image data of the first page from the data block area 109B by referring to the access sequence, B₂-B₅, stored in the block management area 109A.

In this manner, the first page data is stored onto the image data file memory 109 and the attribute information ATTRIB₁ of the first page data is stored onto the first location of the page management table 202. It is the same with the bit-mapped data BMD_{R} received from the image reader 104 and the bit-mapped data BMD_{C} received from the communication line controller 106.

### ADDITION OF PAGE DATA

It is assumed for simplicity that the first page data of the data file has been stored in the image data file memory 109, the attribute information ATTRIB₁ of the first page has been stored in the first page location of the page management table 202, and then the storage data controller 108 receives the image data of a second page from the personal computer 101.

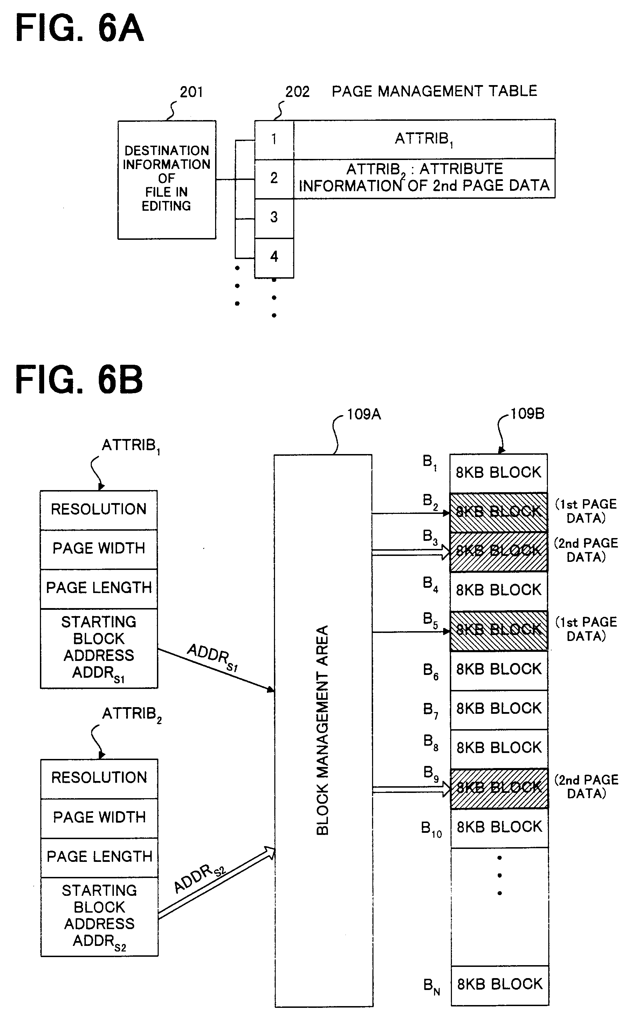

Referring to Figs. 6A and 6B, the primary processor 113 stores the attribute information ATTRIB₂ of the second page onto the second page location of the page management table 202. In Fig. 6B, the attribute information ATTRIB₂ of the second page includes page resolution, page width, page length, and the address ADDR_{S2} of a starting data block B₃.

In the case where the printer emulator 102 receives print data including text and/or graphics described with a known or unknown page description language for a page printer from the personal computer 101, the printer emulator 102 generates a page of bit-mapped data BMD_{PC} based on a designated document size and then outputs the page of bit-mapped data BMD_{PC} to the encoder 103 for storage compression. The encoder 103 encodes the page of bit-mapped data BMD_{PC} to generate the page of encoded image data, which is divided into a plurality of blocks (here, two blocks) under control of the storage data controller 108. The two data blocks are stored onto available blocks of the data block area 109B. It is assumed that the two data blocks corresponding to the second page are stored onto the available blocks B₃ and B₉, respectively, as shown in Fig. 6B.

At the same time, the access sequence of the blocks B₃ and B₉ is generated and stored in the block management area 109A. In other words, the access sequence is set to a sequence of B₃-B₉, which is used to link the data blocks B₃ and B₉ in the original sequence to reproduce the second page data. Therefore, when the address ADDR_{S2} of the starting block B₃ included in the attribute information ATTRIB₂ is received from the primary processor 113, the storage data controller 108 can read the entire image data of the second page from the data block area 109B by referring to the access sequence, B₃-B₉, stored in the block management area 109A.

In this manner, the second page data is stored onto the image data file memory 109 and the attribute information ATTRIB₂ of the second page data is stored onto the second location of the page management table 202. In other words, the attribute information ATTRIB₂ is added to the attribute information ATTRIB₁. It is the same with the bit-mapped data BMD_{R} received from the image reader 104 and the bit-mapped data BMD_{C} received from the communication line controller 106.

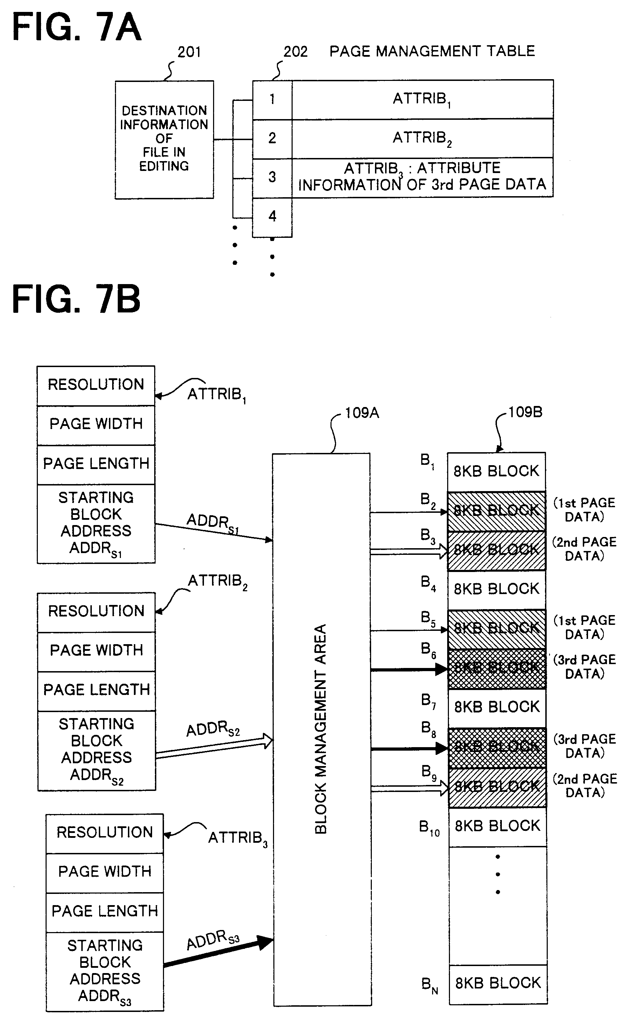

Referring to Figs. 7A and 7B, similarly, a third page data is stored onto available blocks (here, B₆ and B₈) of the image data file memory 109 and the attribute information ATTRIB₃ of the third page data is stored onto the third location following the second location in the page management table 202. In other words, the attribute information ATTRIB₃ is added to the attribute information ATTRIB₁ and ATTRIB₂. In this manner, a plurality of pages of image data are stored in the image data file memory 109 and the image data are reproduced in a page format from the image data file memory 109 using the page management table 202.

### DELETION OF PAGE DATA

It is assumed that three pages of image data are stored in the image data file memory 109 as shown in Figs. 7A and 7B and they are printed out through the laser printer engine 111 in order to check whether they are correct. In the case where the second page, for example, is different from as intended, the user can delete the second page data as will be described hereinafter.

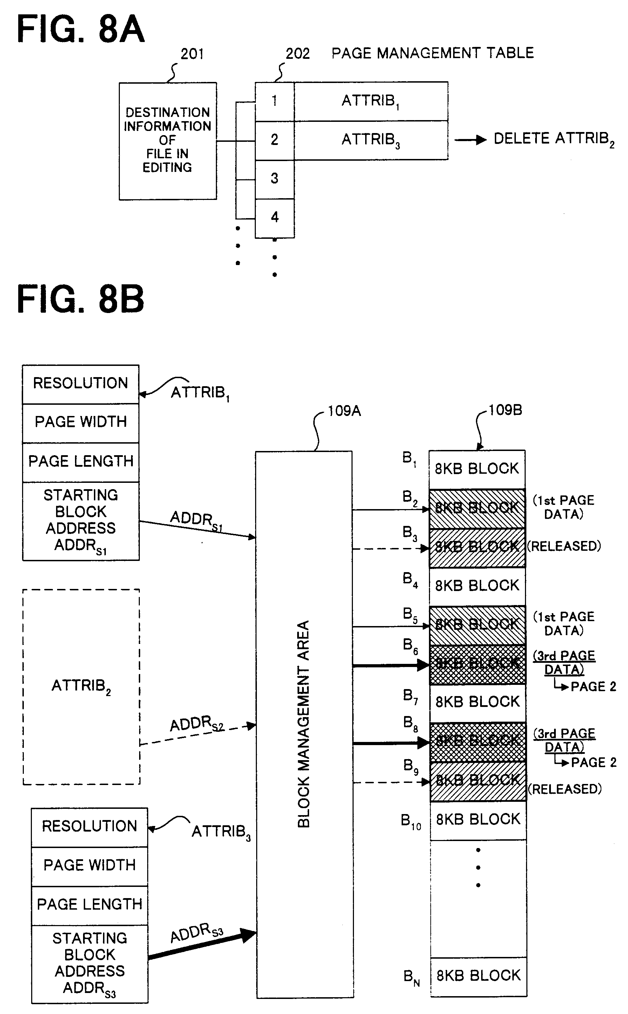

Referring to Figs. 8A and 8B, the user instructs the primary processor 113 to display the file structure corresponding to the page management table 202 on the display 117 and then deletes the second page. This causes the address ADDR_{S2} of the starting block B₃ of the attribute information ATTRIB₂ to be transferred to the storage data controller 108, together with a deletion instruction of the second page data. Referring to Fig. 8B, when receiving the address ADDR_{S2} of the starting block B₃ as well as the deletion instruction from the primary processor 113, the storage data controller 108 makes the blocks B₃ and B₉ available according to the access sequence of the second page data stored in the block management area 109A by writing a release of protection of the second page data onto the block management area 109A.

Subsequently, the attribute information ATTRIB₂ of the second page data is deleted from the page management table 202 of the data file in question. And then the attribute information ATTRIB₃ at the third page location is moved to the second page location in the page management table 202 as shown in Fig. 8A. Therefore, the third page data is changed into second page data.

### INTERCHANGE OF PAGE DATA

It is assumed that three pages of image data are stored in the image data file memory 109 as shown in Figs. 7A and 7B and they are printed out through the laser printer engine 111 in order to check whether they are correct. In the case where the sequence of the first and second pages is changed, the user can change the sequence of the pages by changing the sequence of the attribute information ATTRIB₁ and ATTRIB₂ in the page management table 202.

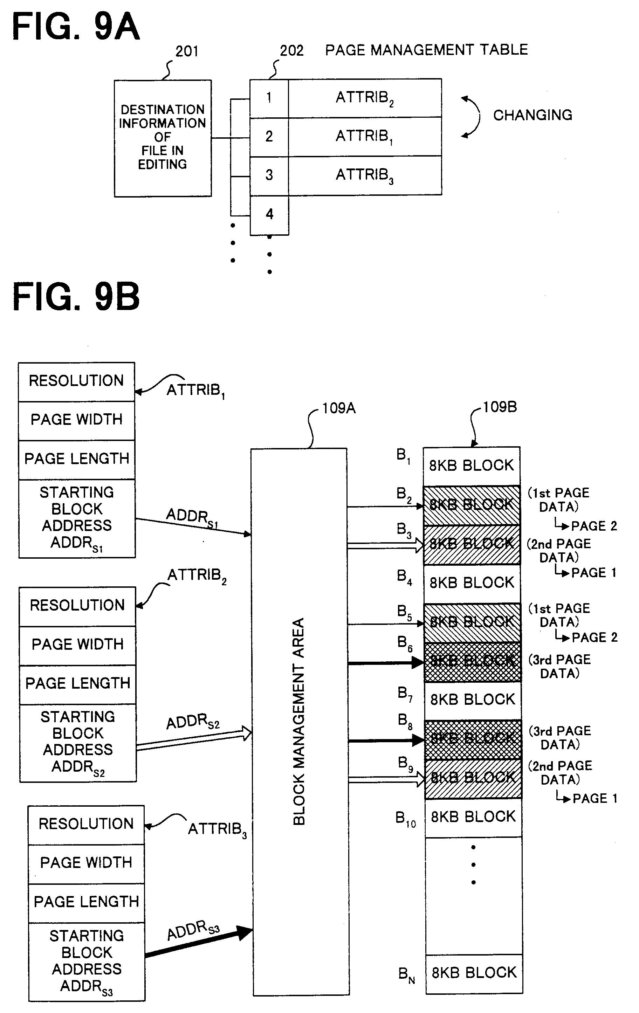

Referring to Figs. 9A and 9B, the primary processor 113 reads the attribute information ATTRIB₁ and ATTRIB₂ from the page management table 202 of the data file in question and temporarily stores them onto the RAM 119. And a changing of the first and second pages is performed by storing the attribute information ATTRIB₁ onto the second page location and the attribute information ATTRIB₂ onto the first page location. In this manner, the first page data is changed into the second page data and the second page data is changed into the first page date as shown in Fig. 9B.

### INSERTION OF PAGE DATA

An insertion of new page data after any page is performed by a combination of the page addition and the page changing. For example, after appending a new page of image data to the page management table 202, a changing of the sequence of the pages is performed, resulting in the new page inserted after a designated page.

### FACSIMILE TRANSMISSION

After desired editing is completed as described above, the primary processor 113 transfers the destination address from the destination information area 201 to a transmission queue file stored in the RAM 119. If the destination information area 201 stores no destination address, it should be input. When the turn of the data file to be transmitted has comes, the primary processor 113 instructs the communication line controller 106 to make a call using the destination address. When the connection is established, the facsimile transmission is started according to the well-known facsimile procedure. More specifically, the primary processor 113 instructs the storage data controller 108 to read the data file in question from the image data memory 109 according to the sequence of pages and the attribute information, that is, resolution, page width and page length, of each page stored in the page management table 202 of the data file. The page data of the data file is decoded by the decoder 110 for expansion. After the expanded data is encoded for communication by the encoder 112, it is transmitted to the destination through the communication line controller 106 and the communication line.

## Claims

1. A communication apparatus for transmitting image data to a desired destination, comprising:
an instruction input device (115) for inputting an instruction; and
a memory (109) for storing the image data,
characterized by
an editor (113, 114, 118) for editing the image data stored in the memory according to an edit instruction received from the instruction input device.

2. The communication apparatus according to claim 1, wherein the editor comprises:
a management memory (114) for storing management information including page information of the image data; and
a processor (113, 118) for editing the image data stored in the memory in pages by changing the page information according to the edit instruction.

3. The communication apparatus according to claim 2, wherein the processor performs one selected from addition of a new page, deletion of a page and a changing of a sequence of pages according to the edit instruction.

4. The communication apparatus according to claim 3, wherein the processor performs insertion of a new page by using a combination of the addition of the new page and the changing of a sequence of pages.

5. The communication apparatus according to claim 1, further comprising:
a management memory (114) for storing first management information (201) and second management information (202) which is associated with the first management information, the first management information including the desired destination, the second management information including page attribute data for each page of the image data; and
a communication controller (106, 113, 201) for transmitting the image data according to the desired destination and the page attribute data which are stored in the management memory,
wherein the editor changes the second management information to edit the image data stored in the memory in pages according to the edit instruction.

6. The communication apparatus according to claim 5, wherein the processor performs one selected from addition of a new page, deletion of a page and a changing of a sequence of pages according to the edit instruction.

7. The communication apparatus according to claim 6, wherein the processor performs insertion of a new page by using a combination of the addition of the new page and the changing of a sequence of pages.

8. The communication apparatus according to any of claims 1-7, further comprising:
an input device (102, 104, 106, 107) for inputting the image data to store it to the memory (109);
an output device (111, 117) for outputting the image data stored in the memory in a page form; and
a controller (106, 113, 114, 118) for instructing the output device to output the image data stored in the memory in the page form before transmitting the image data to the desired destination according to an instruction received from the instruction input device.

9. The communication apparatus according to claim 8, wherein the output device is a printer (111).

10. A facsimile apparatus performing transmission and reception of image data, comprising:
an instruction input device (115) for inputting an instruction;
an input device (102, 104, 106, 107) for inputting image data in pages;
a data memory (109) for storing the image data received from the input device; and
an output device (111, 117) for outputting the image data stored in the data memory in a page form,
characterized by:
a management memory (114) for storing first management information (201) and second management information (202) which is associated with the first management information, the first management information including the desired destination, the second management information including page attribute data for each page of the image data; and
a controller (106, 113, 118) for transmitting the image data according to the desired destination and the page attribute data which are stored in the management memory and for editing the image data stored in the data memory according to an edit instruction received from the instruction input device.

11. The facsimile apparatus according to claim 10, wherein the controller changes the second management information to edit the image data stored in the data memory in pages according to the edit instruction.

12. The facsimile apparatus according to claim 11, wherein the controller performs one selected from addition of a new page, deletion of a page and a changing of a sequence of pages according to the edit instruction.

13. The facsimile apparatus according to claim 12, wherein the controller performs insertion of a new page by using a combination of the addition of the new page and the changing of a sequence of pages.

14. The facsimile apparatus according to any of claims 10-13, wherein the input device comprises an image reader which reads a material by optical scanning to produce the image data.

15. The facsimile apparatus according to any of claims 10-13, wherein the input device comprises a printer emulator which is detachably connected to a computer, the printer emulator producing the image data from print data received from the computer.

16. The facsimile apparatus according to any of claims 10-13, wherein the input device inputs the image data which is reproduced from a facsimile coded image received through a communication line.

17. The facsimile apparatus according to any of claims 10-16, wherein the controller instructs the output device to output the image data stored in the data memory in the page form before transmitting the image data to the desired destination according to an instruction received from the instruction input device.

18. The facsimile apparatus according to any of claims 10-17, wherein the output device is a printer.

19. A transmission method of image data, comprising the step of
a) storing the image data onto a memory, characterized by the steps of:
b) editing the image data stored in the memory according to an edit instruction received from the instruction input device; and
c) transmitting edited image data stored in the memory according to a transmission instruction received from the instruction input device.

20. The method according to claim 19, wherein the step b) comprises the steps of:
storing management information including page information of the image data; and
editing the image data stored in the memory in pages by changing the page information according to the edit instruction.

21. The method according to claim 20, wherein the image data stored in the memory is edited according to one selected from addition of a new page, deletion of a page and a changing of a sequence of pages according to the edit instruction.

22. The method according to claim 21, wherein a new page is inserted into the image data stored in the memory by using a combination of the addition of the new page and the changing of a sequence of pages.

23. The method according to claim 19, wherein the step b) comprises the steps of:
storing first management information and second management information which is associated with the first management information onto a management memory, the first management information including the desired destination, the second management information including page attribute data for each page of the image data; and
changing the second management information to edit the image data stored in the memory in pages according to the edit instruction,
wherein, in the step c), the image data is transmitted according to the desired destination and the page attribute data which are stored in the management memory.

24. The method according to any of claims 19-23, wherein the image data stored in the memory is output in a page form before transmitting the image data to the desired destination according to an instruction received from the instruction input device.

25. The method according to claim 24, wherein the image data stored in the memory is print out by a page printer.
